**Europäisches Patentamt**

**European Patent Office**

**Office européen des brevets**

(19)

(11) Publication number : **0 310 360 B1**

(12) # EUROPEAN PATENT SPECIFICATION

(45) Date of publication of patent specification :
22.02.95 Bulletin 95/08

(51) Int. Cl.$^6$ : **H04L 12/00, H04L 12/54**

(21) Application number : **88309000.3**

(22) Date of filing : **29.09.88**

(54) **Data communication method and apparatus.**

(30) Priority : **30.09.87 US 103485**

(43) Date of publication of application :
**05.04.89 Bulletin 89/14**

(45) Publication of the grant of the patent :
**22.02.95 Bulletin 95/08**

(84) Designated Contracting States :
**DE FR GB IT**

(56) References cited :
**EP-A- 0 195 598**
**IEEE INFOCOM 86 April 1986, IEEE,NEW**
**YORK,US pages 331 - 336;**
**J.A.FIELD:"LOGICAL LINK CONTROL"**
**NINTH DATA COMMUNICATIONS SYM-**
**POSIUM September 1985, IEEE,NEW**
**YORK,US pages 17 -21; D.DRYNAN et al.: "AN**
**INTERNODAL PROTOCOL FOR PACKET**
**SWITCHED DATA NETWORKS"**

(73) Proprietor : **Hewlett-Packard Company**
**Mail Stop 20 B-O,**
**3000 Hanover Street**
**Palo Alto, California 94304 (US)**

(72) Inventor : **Dolkas, Gregory D.**
**4110 Riverwoods Drive**
**Auburn California 95608 (US)**
Inventor : **Martin, William R.**
**1209 Crescendo Drive**
**Roseville California 95678 (US)**

(74) Representative : **Williams, John Francis et al**
**WILLIAMS, POWELL & ASSOCIATES**
**34 Tavistock Street**
**London WC2E 7PB (GB)**

EP 0 310 360 B1

## Description

The present invention generally relates to data communications, such as local area networks (LAN) and, more particularly, to a method and apparatus for controlling the transmission across a data link.

In general, there are a variety of basic mechanisms for transmitting information between two or more information source/sink devices (referred to in the art as data terminal equipment or DTE) on a particular data link. However, in order to ensure the reliable exchange (i.e. to a high probability free of errors and duplications) of meaningful messages between any two DTEs in a data link, it is necessary to define a set of rules, or control procedures, which must be adopted by all the communicating nodes. These rules or procedures are commonly known as communication protocols.

In order to insure compatible development throughout the industry, standards have been set for basic DTE operational specifications, e.g. IEEE 802.3, Carrier Sense, Multiple Access with Collision Detection (CSMA/CD) for LANs. This is the basic data packet standard (where a "packet" is a self-contained message unit comprising information less than the entire message being sent). This standard is used to control access to a shared transmission medium such as a coaxial cable bus to which a number of DTE stations are connected.

The physical transfer is accomplished by data buffering, where anywhere from approximately 128 to 4096 bytes may be buffered (the physical media may limit the maximum, e.g. Ethernet/IEEE 802.3 is limited to 1514 bytes per transferred data field).

In designing communications equipment, there are trade-offs. Larger buffers increase efficiency but smaller buffers require less memory hardware. In practice, smaller buffers may have higher throughput even if the error rate is high, since less data has to be retransmitted to recover from a bad packet.

There are different types of packets. Some contain control information; others contain user data.

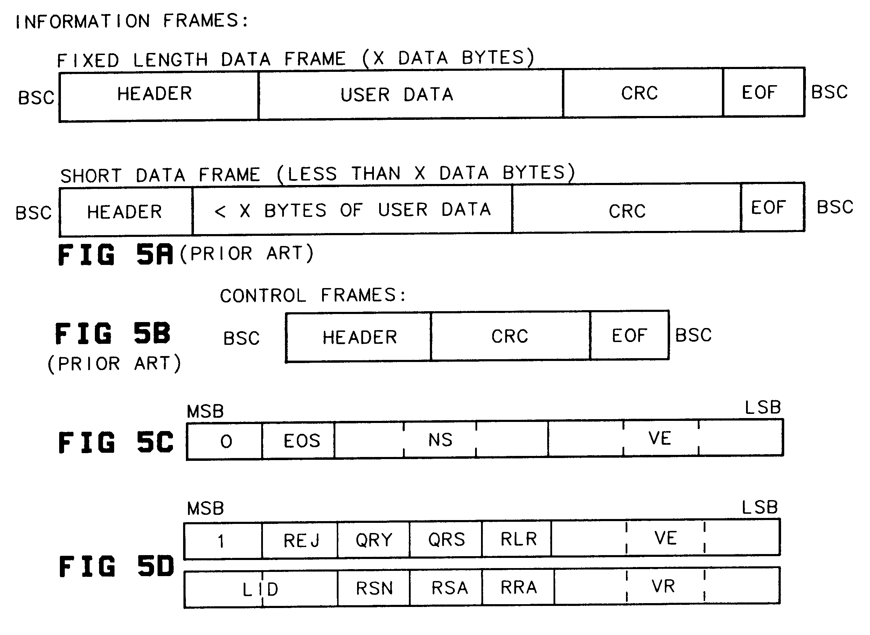

Packets, in turn, have different parts. Delimiters mark the start and end of a packet, framing the packet. They are also used to synchronize the transmitter and receiver sections of the DTEs on the link. Frame structure is concerned with defining each unit of information transferred across a data link. Typically there are control frames (C-FRAMES) for link management and information frames (I-FRAMES) for the transfer of user's message data. Typical information frames and control frames are shown in FIGURES 5a and 5b, respectively. The header at the beginning of a packet identifies the type of packet information, viz. control or data. Data packets contain the user's data (as opposed to data which the protocol understands). Control packets relate to information established by the protocol.

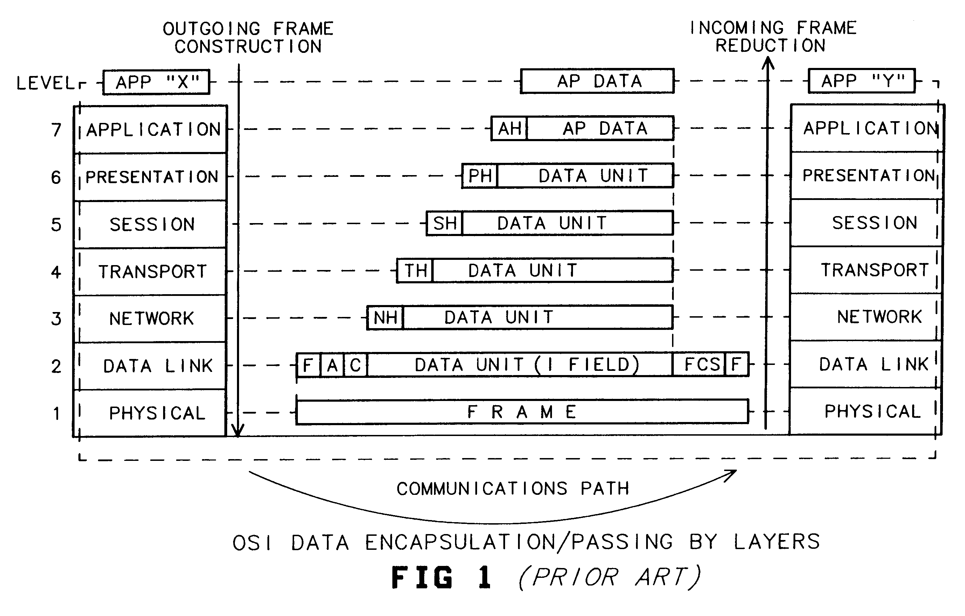

Protocols are generally organized into layers, each layer operating more or less independently. For example, in the open systems interconnection (OSI) model of the International Standards Organization, a seven layer standard, shown in **FIGURE 1**, has been adopted to make multi-vendor networking products easier to accomplish. The types of frames and messages used by each layer vary since they each perform different and complementary functions. For example, a higher level software layers communicate over the link by exchanging messages using the resources provided by lower layers. Link Layer protocol is concerned with providing reliable transmission on the data link, viz., providing a reliable transport facility across the physical transmission media link between DTEs. Important components of a Link Level protocol are connection management, error control and flow control.

Error control is concerned with both error detection and correction. The quantum of recovery is a packet. Error detection is usually determined by using a Cyclic Redundancy Check (CRC in FIGURES 5a and 5b), a numeric value computed from the data in the message transmitted which is compared to the value generated from the data received. Error recovery is achieved by rejection of the bad packet by the receiving DTE node on the link and retransmission from the transmitting DTE node on the link.

Flow control is concerned with controlling the rate of transmission of elements - characters or frames of characters - on a link. Transmission and reception are generally asynchronous processes. Therefore, flow control is necessary so that the receiver always has sufficient buffer storage resources to accept each element sent to it, i.e. to prevent the transmitter from overrunning the receiver. The common means for achieving flow control is by using "start" and "stop" control messages.

In general, a Link Layer protocol can be considered as being concerned with several intricacies of communicating over a link: first, with the initial setting up of the link to ensure both parties are ready to exchange information, second, with the ordered exchange of data blocks or messages across the link, and third, with the orderly release or clearing of the link. The present invention relates to the first and second. A number of control messages are needed to perform the various functions.

One common type of Link Layer protocol for bidirectional transmission on a link is commonly known as the sliding window protocol. The essence of all sliding window protocols is that at any instant of time, the transmitting node maintains a list of consecutive sequence numbers corresponding to frames it is permitted to send. These frames are said to fall within the sending window. Similarly, the receiving node also maintains a receiving window corresponding to frames it is permitted to accept. The protocol is required to deliver the messages to the destination DTE in the same order they were passed from the source DTE. Since frames currently within the sender's window may ultimately be lost or damaged in transit, the sender must keep all these frames in its memory for possible retransmission. Thus, the sequence numbers of the transmitted frames within the sender's window represent frames sent but not acknowledged. Whenever a new message arrives from the host DTE, it is given the next highest sequence number, and the upper edge of the sender's window is advanced by one. When an acknowledgement comes in, the lower edge is advanced by one. In this way the sender's window continuously maintains a list of unacknowledged frames. The receiver's window corresponds to the frames it may accept. When a frame whose sequence number is equal to the lower edge of the window is received, it is passed to the host receiving DTE, an acknowledgement is generated, and the window is rotated by one. For additional detail on sliding window protocol, reference to a text such as <u>COMPUTER</u> <u>NETWORKS</u>, A.S. Tanenbaum, copyright 1981, Prentice-Hall, Inc., Chap. 4.2, is recommended. An example of a sliding window protocol in practical use is disclosed in the document: "Logical Link Control" by J.A.Field, IEEE INFOCOM 86, April 1986, IEEE New York, US, pp 331-336.

Known data link protocols assume that a data packet of a particular sequence number is available for re-use (i.e. receiver buffer space is available) when the data have been acknowledged. However, when data rates are high compared to the total amount of buffer space, this often is not the case, causing "stop" and "start" packets to be sent excessively. At very high speeds, a "stop" packet may not arrive in time. Therefore, one or more packets will be lost at the receiving DTE for lack of buffer space. An error recovery mechanism would then have to be used to recover the data. This wastes time and link bandwidth.

In prior art protocols, large numbers of buffers are often required, prohibiting one-chip integrated circuit solutions. Packet headers are very complex, using encoded fields to transmit each individual control instruction. Thus, decoding is complex, requiring complex hardware.

Other problems also occur due to the nature of the physical transmission media, e.g., two-wire open "lines, twisted pair lines, coaxial cables, and optical fibers.

Hence, there is a need to improve the reliability of the data packets in data links. Additionally, there is a need to provide a communication protocol which works effectively at high speed transmission rates.

The present invention relates to a component of a data communication equipment (DCE) - for example, a backplane input-output adapter - which establishes and maintains Link Level protocol for the local DTE coupled to a communication link through the adapter.

Generally, the present invention provides a method and apparatus for improving the performance of the data flow in a high speed data link.

It is an advantage of the present invention that it provides a method for the high speed (e.g., 100 megabits per second) transporting of data, which is compatible with the transmission rates associated with fiber optic transmission media and suitable for implementation in a single integrated circuit device.

By changing the protocol format to one which shortens the length of data within an information packet, the present invention provides an advantage of allowing implementation in a single integrated circuit chip, hence, lowering the cost of a link connection and increasing its mean time between failure (MTBF).

Yet a further advantage of the present invention is that full error detection and correction and flow control are provided at the Link Layer level.

A further advantage of the present invention is that it provides simultaneous bidirectional communication.

Another advantage of the present invention is that it provides continuous, bidirectional flow of information frames without requiring an interrupt to send flow control frames.

Another advantage of the present invention is that it provides data link error and flow control on a single integrated circuit chip using relatively small buffers.

Still another advantage of the present invention is that it provides flow and error control frames, using instruction bits in said frames (rather than requiring separate frames for each control instruction) and operating as headers in both I-FRAMES and C-FRAMES.

In a basic aspect, the present invention includes a method for controlling data transmission using an open systems interconnection model as defined by claim 1.

In another basic aspect, the present invention provides in data communication equipment, a protocol controller device as defined by claim 15.

Other features and advantages of the present invention will become apparent upon consideration of the following detailed description and the accompanying drawings, in which like reference designations represent like features throughout the FIGURES.

FIGURE 1 (prior art) is a depiction of the OSI data encapsulation protocol standard.

FIGURE 2 is a depiction of a typical pattern of a stream of information flow on a communication link as implemented in accordance with the present invention.

FIGURE 3 is a schematic block diagram depicting the overall structure of the apparatus of the present invention.

FIGURE 4 is a preferred embodiment schematic block diagram of the apparatus of the present invention as shown in FIGURE 3 as implemented in a single integrated circuit architecture.

FIGURES 5a-5d are depictions of transmission frames in which:

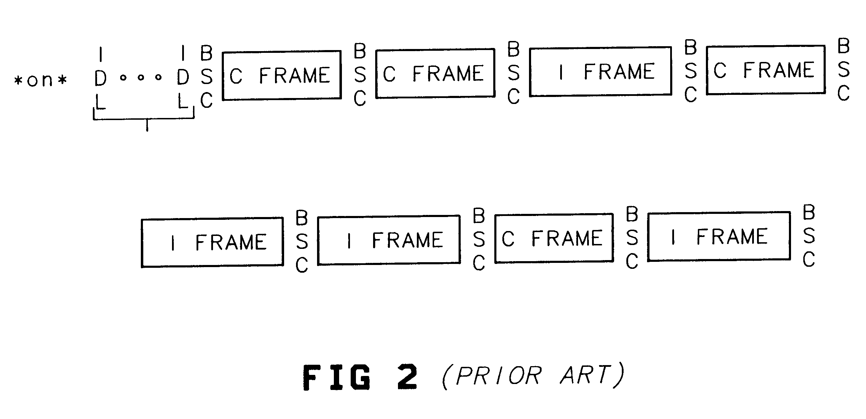

FIGURE 5a (prior art) is a depiction of two formats of information data frames in a communication link flow pattern such as shown in FIGURE 2;

FIGURE 5b (prior art) is a depiction of a control data frame as may be found in a communication link flow pattern such as shown in FIGURE 2;

FIGURE 5c is a depiction of an information data frame header according to the method of the present invention;

FIGURE 5d is a depiction of a control data frame header according to the method of the present invention.

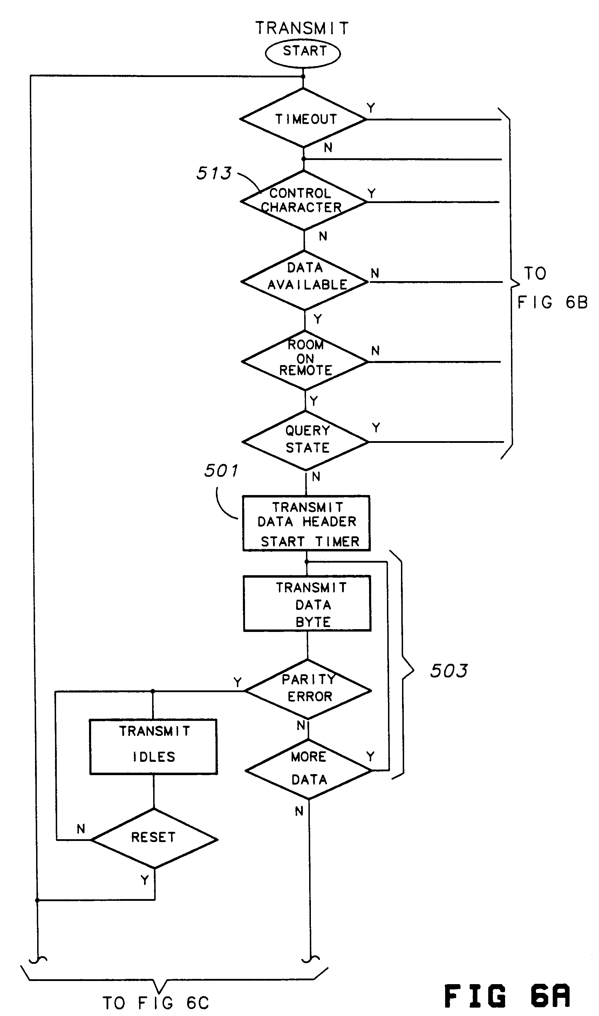

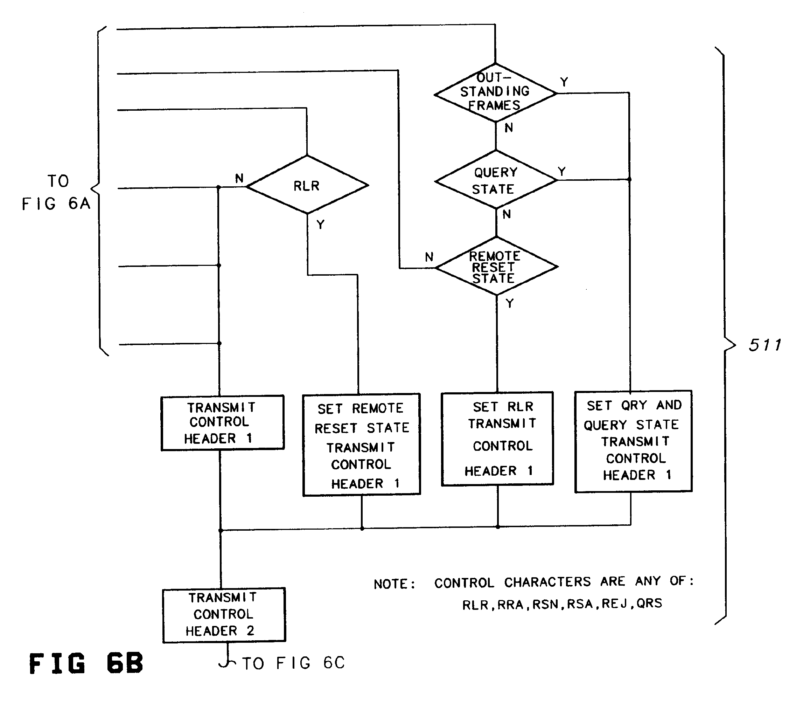

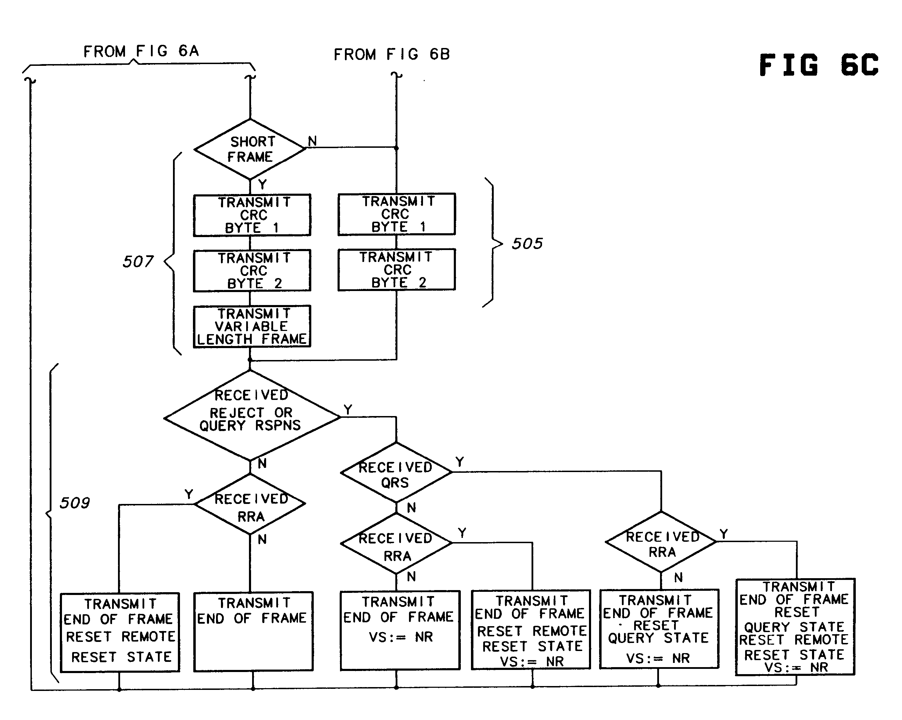

FIGURE 6a-6c is a flow chart representation according to the present invention of a state machine for establishing data flow in the TRANSMIT mode.

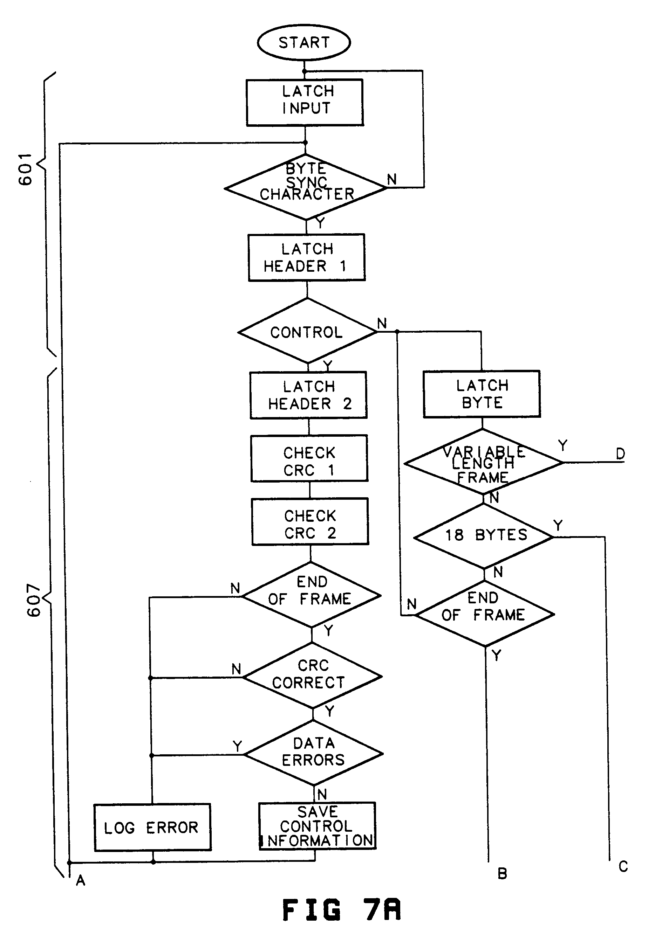

FIGURE 7a-7b is a flow chart representation according to the present invention of the state machine for establishing data flow in the RECEIVE mode.

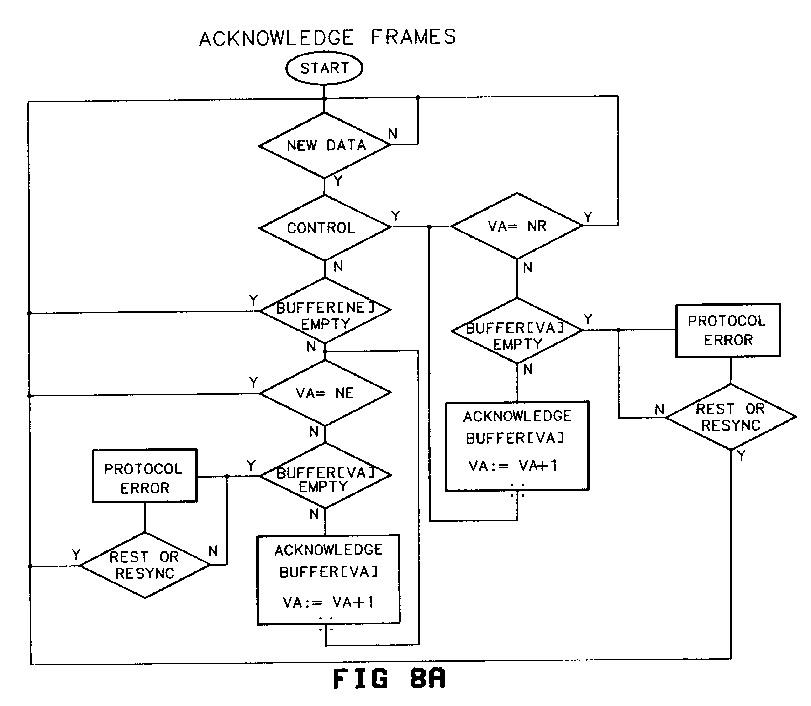

FIGURE 8a is a flow chart representation according to the present invention of the state machine for ACKNOWLEDGE data frames.

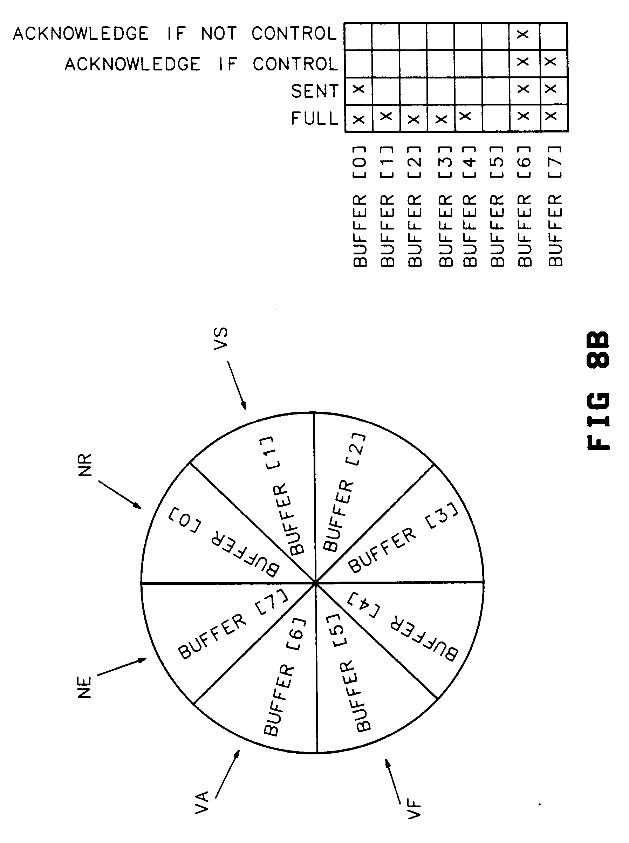

FIGURE 8b is a depiction of an example of ACKNOWLEDGE state variable buffer region pointer operation as shown in shown in FIGURE 8a.

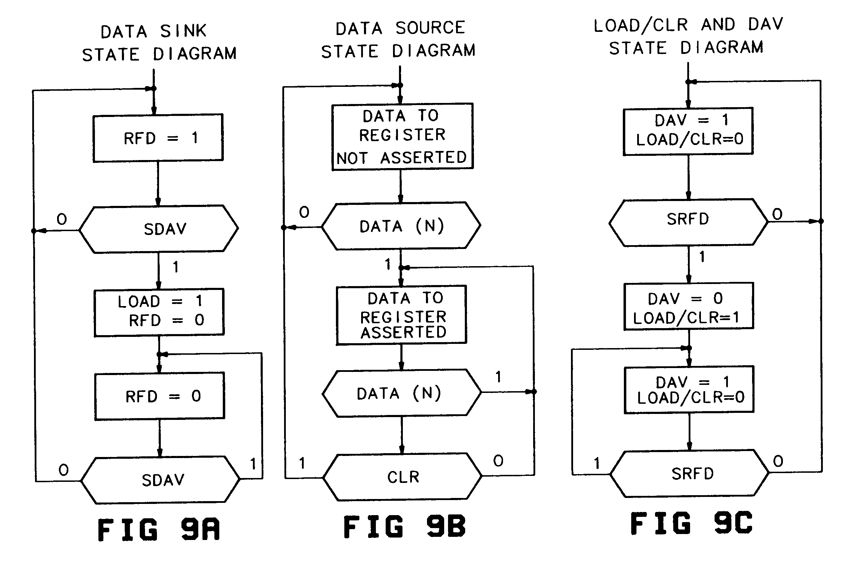

FIGURES 9a, 9b and 9c are flow charts according to the present invention of the state machine for establishing internal synchronization conditions.

The drawings referred to in this description should be understood as not being drawn to scale except if specifically noted.

Reference is made now in detail to a specific embodiment of the present invention, which illustrates the best mode presently contemplated by the inventors for practicing the invention. Alternative embodiments are also briefly described as applicable. It is contemplated by the inventors that the apparatus may be constructed in integrated circuit (IC) form and, more specifically, as a single IC chip. As such, however, a detailed description of the particular circuitry or process technology in an IC implementation is not necessary to an understanding of the inventive concept disclosed herein.

A glossary of terms, including a summary of the TRANSMIT MODE and RECEIVE MODE state variables defined for this description of present invention, is shown in TABLE 1:

**TABLE I**

| | |
|---|---|
| BSC | Byte Synchronization Character. |
| CDAV | Control Port Data Available. |
| CRC | Cyclic Redundancy Check. A numeric value computed from the bits in the message to be transmitted; used for the detection of errors. |
| DDAV | Receive Buffer Data Available. |
| DMA | Direct Memory Access. |
| DRFD | Transmit Buffer Ready. |
| DEVRDY | Device Ready/Data Acknowledge. |
| EOF | End of Frame. Physical Link Layer control symbol. |
| EOS | End of Segment. Indicates the current I-frame is the last of a Network Layer 3 packet. |
| EN | Enable DMA. |
| IDL | Idle Character. |
| LID | Link ID. Reserved for future link identification, must be zero. |
| NS | Send Sequence Number. The current value of the send variable, VS; i.e., the sequence number of this I-frame. |
| NE | Empty Sequence Number. The current value of the (to-) empty variable, VE; i.e., the sequence number of the next frame to be removed (emptied) from the receive buffer. |
| NR | Receive Sequence Number. The current value of the receive variable, VR; i.e., the sequence number of the next frame expected by the receiver. |
| QRY | Query. The transmitting node has timed out waiting for a previously transmitted frame to be acknowledged. |
| QRS | Query Response. Marks this frame as the response to a previous query. |
| REJ | Reject. Indicates that a frame was received out-of-sequence, i.e., NS of the received frame did not |

equal VR.

RLR    Remote Link Reset. Causes a pulse to be genered on the RLR pin of the protocol chip.

RRA    Remote Reset Acknowledge. Acknowledges the receipt of an RLR.

RSN    Resynchronize. Re-initiates the link.

RSA    Resync Acknowledge. Acknowledges RSN.

RST    Reset to the protocol controller chip.

RTS    Request to Send.

RTR    Ready to Receive.

RX    Device Receive.

### For the Transmitter

VS    Send State Variable. Points to the next I-frame to be transmitted.

VA    Acknowledge State Variable. Points to the next I-frame to be acknowledged by the remote.

VW    Window State Variable. Points to the next I-frame to be removed from the transmitter's window.

VF    Fill State Variable. Points to the next I-frame that may be filled by the transmitter DMA (when $TX\_F(VF) = 0$).

### For the Receiver

VR    Receive State Variable. Points to the next I-frame to be received from the remote (currently empty).

VE    Empty State Variable. Points to the next I-frame to be emptied by the receiver DMA.

### These state variables are related as follows (all math modulo 8):

VA <= VS    Frames VA through, but not including, VS have been sent and not yet acknowledged.

VW <= VA    Frames VW through, but not including, VA have been acknowledged by the remote host, but have not been emptied by the remote yet.

VF <= VA    Frames VF through, but not including, VA have been received, acknowledged, and emptied by the remote, are available for re-filing by the local host.

VE <= VR    Frames VE through, but not including, VR have been received, and are ready to be emptied into the host.

TX_FULL(Vx)    Full. Indicates the buffer contains data.

SENT(Vx)    Sent. Indicates the buffer has been sent, but not acknowledged.

TX_EOS(Vx)    End-of-Segment. Indicates this is the last frame of a Network Layer 3message segment.

TX_CNTR(Vx)    Transmit Counter. Indicates the number of bytes in the buffer (if any) in excess-1 notation (O..F. = 1..16).

RX_FULL(Vx)    Full. Inciates the buffer contains data.

RX_EOS(Vx)    End-of-Segment. Indicates the EOS bit in the header of the received frame was true.

RX_CNTR(Vx)    Receive Counter. Indicates the number of bytes in the buffer (if any), in excess-1 notation (O..f = 1..16).

RJS bit    Reject State. A reject frame has been sent.

QS bit    Query State. A query frame has been sent.

RSS bit    Re-sync State. A re-sync frame has been sent.

RRS bit    Remote Reset State. A remote reset frame has been sent.

TXTO Counter    Transmit Timeout. A re-startable acknowledge timer.

A typical flow of information across a link in accordance with the present invention is shown in FIGURE 2. When coming on-line, after either a power cycle or running a self test, an idle symbol (IDL) is sent to assist in gaining clock synchronization between DTEs. Next, and alternatively between each frame, a byte synchronization character (BSC) symbol is sent across the link to thereafter allow the receiver to retain or regain synchronism even in the presence of link induced errors.

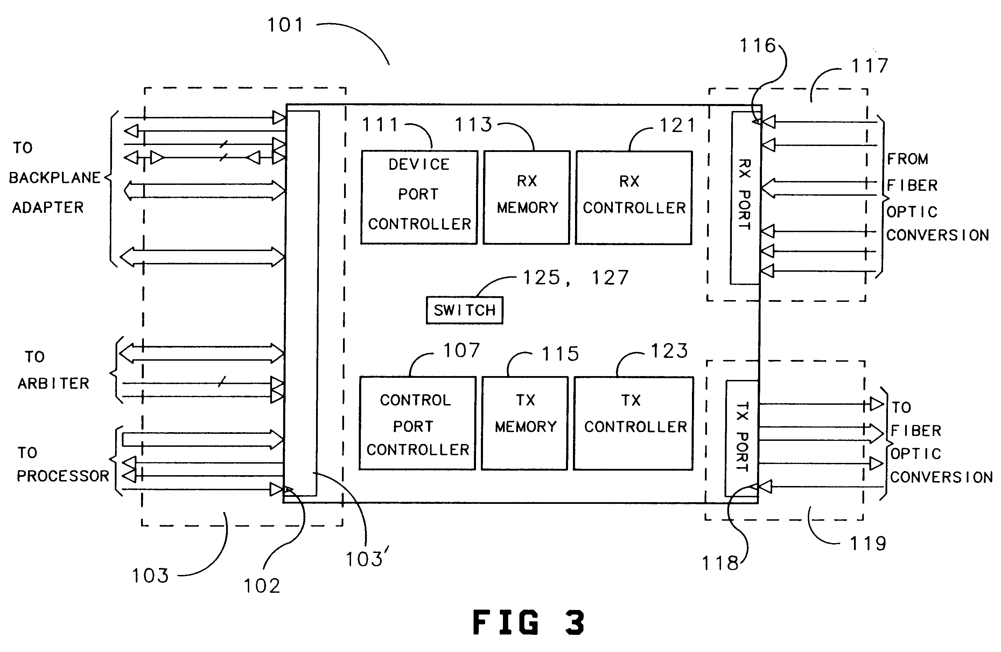

Referring to **FIGURE 3**, the device 101 (referred to hereinafter as protocol controller 101), is responsible for transforming data to and from the Link Layer protocol format.

The protocol controller 101 can be one component of an input-output (I/O) card device for a computer in which it couples input/output bus backplane adapter and microprocessor components (not shown), which receive information from a local host DTE, to an output component (not shown), such as a parallel-to-serial converter (PSC), which is coupled to the communication link. As a preferred embodiment described herein, the protocol controller 101 is presented as part of an I/O card coupling a local host DTE to a fiber optic communication link (not shown). In order to describe the features and operation of the invention, it is assumed that an identical, or compatible, data communication equipment having a complementary adapter is available at a remote node on the link. It is not the intent of the inventors that the scope of the invention be limited by this example.

The protocol controller 101 establishes and maintains Link Level protocol for the DTE which is coupled to a communication link through the I/O card. The actual protocol control takes place in the management of data that are sent and received by the protocol controller 101. The protocol formatting is a variation of a Link Layer "sliding-window" protocol.

Four bidirectional input/output (I/O) port controllers, CONTrol 107, DEVice 111, Receive (RX) 121 and Transmit (TX) 123, provide bidirectional capability through the ports 103, 117, 119. In the present embodiment, the protocol controller 101 provides both a half-duplex and full-duplex interface. Data to be transformed to the protocol format by the protocol controller 101 and then transmitted is received via a bus from another system component, such as an I/O bus adapter device (not shown). A control port controller 107 is used, such as by a related processor component (not shown), to access control registers and to transfer data to and from the link, in this embodiment, for example, via the RX port 117 and the TX port 119 coupled to a fiber optic conversion unit. The control port controller 107 comprises registers and a programmable logic array used to control and monitor the behavior of the link and data transfers active on it. Some error conditions and recovery measures are managed through this path. Data transfers via the control port controller 107 usually consist of header messages (described in detail hereinafter) - viz. those used to setup and execute data transfers between a local I/O card or DTE and a complementary remote device - which would follow the Network Layer 3 protocol as shown in FIGURE 1. Timing control is specific to each commercial embodiment designed. Hence, only general reference will be given throughout this description.

The device port controller 111 establishes a high speed direct access port which handles the majority of the I/O traffic on the link. It provides a direct data path to inbound, RX, or outbound, TX, memory components 113, 115, depending upon the direction of the data transfer. Status indicators are provided via the port 103 to indicate whether the device port controller 111 is ready to send or receive data as well as to identify when a particular stream of data has reached a termination condition. Again, timing is device specific.

In the preferred embodiment, the control port controller 107 and device port controller 111 can be implemented as a single register 103' controlled by the microprocessor.

Both the paths for inbound link data, RX DATA from the RX port 117, and outbound link data, TX DATA to the TX port 119, contain memory, in the present embodiment, an addressable first-in, first-out (FIFO) memory component 113, 115, respectively.

In the case of data in the outbound (TX memory) FIFO 115, the protocol controller 101 must guarantee that any data (TX data) loaded into the FIFO 115 will not be overwritten until it has been correctly received by the remote node device on the link and, furthermore, that the inbound FIFO of the remote node controller (not shown) will not be overrun.

For inbound data, RX DATA from the RX port 117, the protocol controller 101 must guarantee that all data have been received in the order it was loaded into the remote node's outbound FIFO and that any attempts at overrun will generate a protocol error.

A receive port controller 121 take parallel data from the RX port 117, processes it, verifies its integrity, and then extracts the protocol Link Layer 2 information from it. Valid data extracted from I-FRAMES - consisting of formatted buffers obtained from the outbound FIFO 115, involving prefacing the buffer of data with an information header which identifies the particular buffer to be sent and then appending a CRC to the buffer to protect the data buffer's content - are loaded into the inbound FIFO 113. Remote node state information is extracted from I-FRAMES and C-FRAMES - containing the current state of the inbound FIFO 113 as well as link control commands - and directs behavior of a transmit port controller 123. In the present embodiment, the receive port controller 121 also monitors the state of the fiber optic converter unit's receiver and provides this information to the related microprocessor via the control port controller 107.

The transmit port controller 123 is used by the protocol controller 101 to send data from the outbound FIFO 115 to the link via the TX port 119 to the fiber optic converter unit's transmitter. It also supplies state information to the remote node to allow management of the link via the Link Layer 2 protocol. Data and state information are packaged in the I-FRAMES and C-FRAMES, respectively.

Two main factors influence whether the protocol controller 101 will send an I-FRAME out of the transmit port: 1) the ability of the remote node to accept another buffer, and 2) the presence of a buffer to be sent. The protocol controller 101 must determine the state of the remote node's inbound FIFO from data received through the receive port controller 121. C-FRAMEs are sent if the protocol controller 101 is incapable of currently sending an I-FRAME. Acknowledgement of outstanding buffers and transmissions retry is also caused by examination of the state of the remote node's inbound FIFO by the transmit port controller 123.

A special feature of the present embodiment are switch components 125, 127. These switch components 125, 127 allow the inbound and outbound data paths to be either manually or automatically pointed to the device port controller 111 or the control port controller 107. Each FIFO 113, 115 has its own independent switch 125, 127, respectively. When the switches 125, 127 are manually operated, an associated processor explicitly can establish the connection to the I/O data paths by pointing the switch to one of the port controllers 107, 111. In an automatic mode, each switch 125, 127 toggles between the control port controller 107 and device port controller 111, depending upon information previously loaded into the control port controller register 103. The switch feature only affects data transfer paths; it does not inhibit control port controller register 103 accesses.

Timing control can be implemented by generating two internal, non-overlapping clock signals using an external system clock input 102. Another external clock input 118 signal is used for TRANSMIT MODE of operation. Still another external clock input signal 116 is used for RECEIVE MODE of operation. Some signals must provide communication between the RECEIVE and TRANSMIT clock domains. To accomplish this, these signals are first synchronized to the system clock domain signal 102 and then to the TRANSMIT clock domain 118. In the preferred embodiment, the internal system clock frequency is twice that of the external system clock input 102, allowing four clock phases to be generated per external system clock cycle.

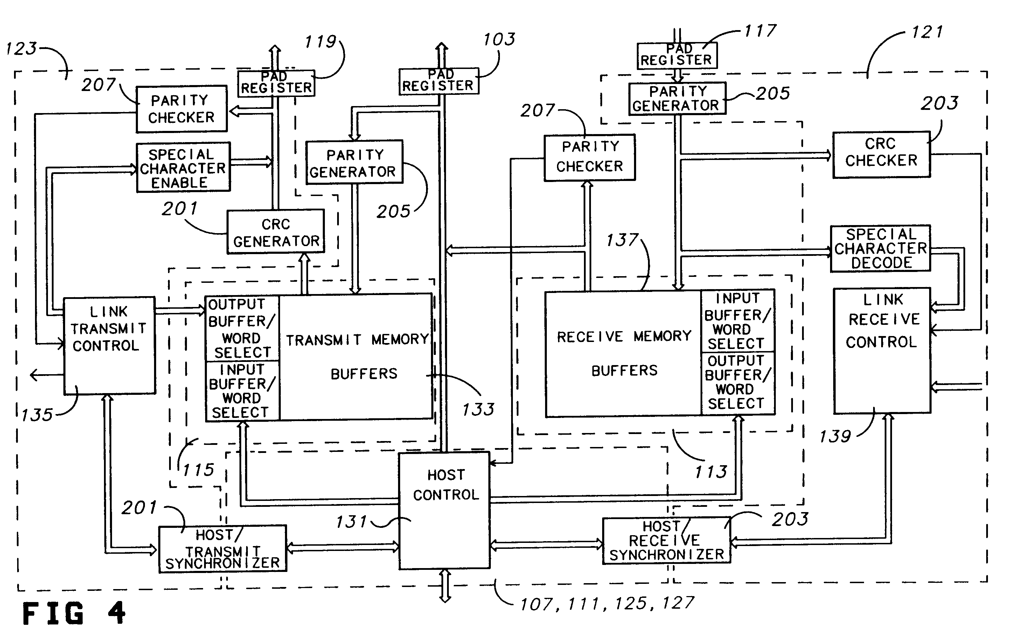

**FIGURE 4** shows an exemplary, single-chip, LSI integrated circuit block diagram implementation of the above-described device. As will be recognized from the following description of the protocol implemented by the protocol controller 101, the apparatus generally can be thought of as operating as a state machine.

Both the TRANSMIT and RECEIVE sections of the controller 101 have CRC circuitry. The transmit CRC Generator 201 monitors the data stream and maintains a running CRC. A START signal will clear the CRC register at the beginning of each frame. The contents of the upper half of the CRC register is gated onto the data bus during the two clock cycles following the data. These two bytes represent the contents of the CRC register after the last data byte was clocked in.

The receive CRC Checker 203 also maintains a running CRC and is reset at the start of each frame just like the transmit CRC Generator 201. It also maintains a running comparison of received data and the contents of its CRC register during the last two clock cycles. Matching of received CRC and locally computed CRC can thereby be accomplished.

As also shown in FIGURE 4, common parity generation and checking 205, 207 is also provided if required by the overall system.

In general, the protocol mechanism of the present invention has several features which provide for improved data transmission.

Reductions are made to the size of the data portion of information packets. The shortening of the length of data within an information packet allows on-chip buffering. This increases link speed by giving faster access to the data.

Discrete bits in the packet headers are used for both information and control packet types. The control packet headers, as shown in **FIGURES 5C** and **5D**, use distinct bits to enumerate the packet type (instead of encoding the bits within each field as shown in **FIGURE 5B**). The independence of the distinct bits also allows the simultaneous sending of several control flags. This reduces the number of control packets sent, thereby increasing link throughput.

Reductions are made in the number of types of packets and the size of their headers. The number of packet types has been reduced to two (from the traditional three). The information packet header size is reduced from two bytes to one byte.

A third state variable, Ve, is added to the traditional two, Vs and Vr, in the packet header. The addition of Ve allows the transmitting DTE to know how much information it can send without overrunning the receiving DTE.

**FIGURES 6** through **9** are flow charts showing the basic state machine control functions performed in the data transformation to and from the protocol format implemented by the present invention.

**TRANSMIT MODE**

Referring to **FIGURE 4** and the flow chart in **FIGURES 6A-C**, operation in the TRANSMIT MODE is defined for the preferred embodiment. It will be recognized by a person skilled in the art that the functions to be performed can be implemented in microcode stored in a progammable logic array (PLA) 131 as shown in **FIGURE 4**. The state variables relationships (in math modulo 8 in the preferred embodiment) are summarized in TABLE 1 above.

Data are loaded into the transmit memory FIFO 133 per the control direction provided by the microcode of the host PLA 131 receive section. A full sixteen byte buffer is loaded unless there is a higher level end-of-segment (EOS) in the Direct Memory Access (DMA) Control Register, indicating a shorter buffer needs to be sent 507. When the buffer 133 has been loaded, the host transmit PLA 131 sets a signal, TX_Full[X], indicating that the buffer is available. The information includes a count indicating how many bytes are valid. The controller 101 will drive a PSC transmit data bus and control with signals generated every transmit clock cycle. The controller 101 will insert a BSC at the beginning of each frame, a CRC after the body of each frame, a VLF after the CRC if necessary to indicate a short data frame, and an EOF at the end of each frame. The controller 101 will drive an IDL signal after a reset and before and after entering a loop back mode and if a parity error is encountered.

A TRANSMIT control PLA 135 sends user information by sending I-FRAMEs. PLA 135 sends control information in C-FRAMEs.

C-FRAME transmission occurs when: there is new control information, there is an outstanding RSN, there is an outstanding QRY, there is an outstanding RLR, or an I-FRAME cannot be sent. The TRANSMIT MODE is required to transmit a C-FRAME whenever any of the control flag bits, REJ, QRY, QRS, RSN, RSA, RLR, or RRA are set. These C-FRAMEs have precedence 513 over I-FRAMEs. Since all of the bits which are set are carried with the C-FRAME, only one frame needs to be sent when more than one bit is set. All bits which were transmitted in the control fame are cleared when the frame is sent. When there are no I-FRAMEs ready to send (or the transmit window is closed), C-FRAMEs provide updates to the remote as to the state of the local receiver.

I-FRAME transmission will occur when: there is valid data in the memory to be sent and the transmit window is open and none of the first three reasons for sending a C-FRAME are true.

The link TRANSMIT control PLA 135 transmits the data out of the memory 133 if there is space available at the other end of the link, i.e. whenever the transmit window is open 509. The PLA 135 prefixes data with a header containing the buffer number of the buffer being sent, NS, and the buffer number of the I-FRAME that the local receiver expects to empty next, NE. In the preferred embodiment, the data are followed with a 16-bit CRC used for error detection, and the special character, VLF, if the frame is less than 16-bytes.

In the preferred embodiment, the transmit window is open when the number of outstanding frames is one less than the number of buffers available, or equivalently, when the transmit sequence variable, VS, is not adjacent to the transmit window variable, VW (i.e., VS+1<>VW). This limits the number of outstanding frames, so that the TRANSMIT MODE can recover from errors in transmission. Because the maximum number of outstanding frames is limited to the number of frame buffers minus one, the pointer VS can never overtake VW, thereby eliminating ambiguity of all full or all empty buffers. The send state variable, VS, is incremented whenever a frame is transmitted. The transmitter manages the window state variable, VW, based on the receive and empty sequence numbers, NR and NE, respectively, in the frames received, and may modify VS to cause re-transmission in the case of an error.

IDL transmission occurs: after a RST, before entering or leaving a loopback mode, JLB, after entering or leaving JLB, and when a parity error occurs.

If there is a parity error detected in the output, the transmit state machine will immediately begin transmitting IDLs on the link which will guarantee that the remote end will not interpret the data as valid. At this point, the controller 101 will generate an interrupt to the local microprocessor and will wait for a rest signal before transmitting anymore C-FRAMEs or I-FRAMEs.

To transmit a C-FRAME, the transmit state machine will send: a BSC, the two bytes of control information (control headers), and two bytes of CRC followed by an EOF.

To send an I-FRAME, the transmit state machine sends: a BSC, one byte of header information, the user data, VLF (if there were not sixteen bytes transmitted, and an EOF.

## TIMER

The link level protocol requires a timer at each DTE for use in recovering from lost frames. In the preferred embodiment, the timer is fixed in duration at 256-byte times (for a one km link length, speeds to 120 megabaud, and frame sizes up to 16-bytes of data). The timer must be able to be restarted for the full duration or cleared (disabled) at any time. The timer is always left running whenever there are any unacknowledged I-FRAMEs within the transmit window, i.e. whenever VS<>VA, or there is an outstanding QRY or RLR. Expiration of the timer signals the sending of a QRY to the remote DTE to detect lost frames or acknowledge signals or retransmission of QRY or RLR in the event of no response.

The rules for maintaining the transmit timer are as follows: (re)start when: an I-FRAME is transmitted, or a C-FRAME with QRY asserted is transmitted, or a C-FRAME with RLR asserted is transmitted; restart the timer when: one or more I-FRAMEs are acknowledged (VA moves), and after that acknowledgment one or more I-FRAMEs is still outstanding (VA<>VS), and QRY is not outstanding, and RLR is not outstanding; clear the timer when: no I-FRAMEs are outstanding (VA=VS), and a QRY is not outstanding (QS=0), and RLR is not outstanding (RRS=0); and if the timer ever expires: if either QS or RRS are set, send a C-FRAME with corresponding flag bit set and restart the timer; if neither QS or RRS are set, set QS and send a C-FRAME with QRY set and restart the timer

Note that the protocol controller 101 thus is providing error control at the Link Layer level in the TRANSMIT MODE. Moreover, the protocol controller 101 of the present invention also provides flow control 511 in the TRANSMIT MODE.

## RECEIVE MODE

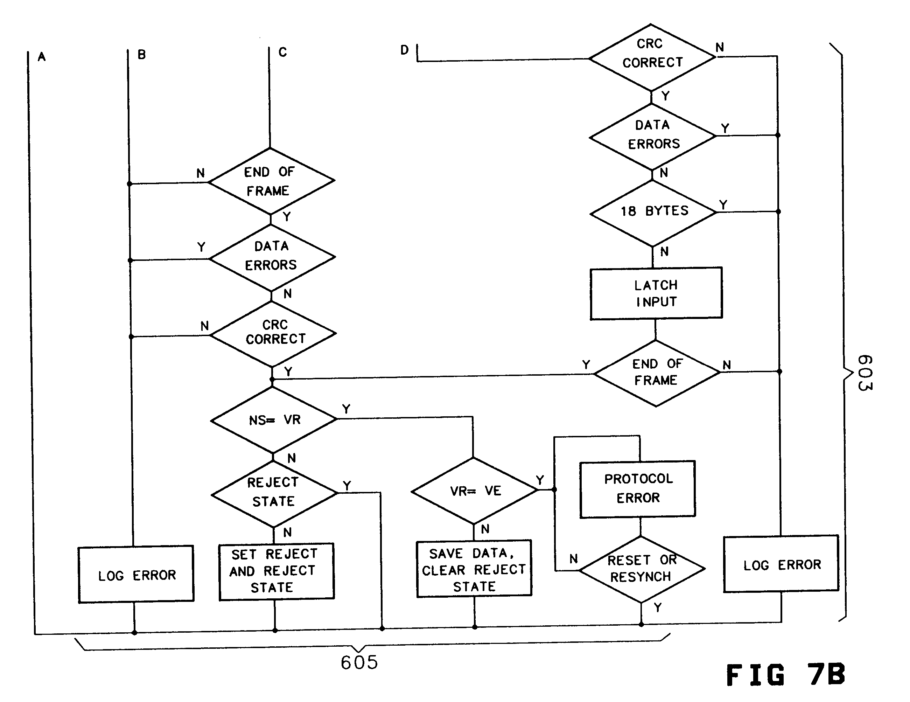

Still referring to **FIGURE 4**, but switching to the flow chart of **FIGURE 7**, the RECEIVE MODE of operation is described.

The RECEIVE MODE is another state machine operation. In general, the receive state machine checks the incoming frames and, if the CRC is correct; the number of bytes is correct; no link errors occurred; and the frame sequence is correct on I-FRAMES, it latches data either in the appropriate register within the link receive control PLA 139 for C-FRAMEs or in the appropriate buffer in memory 137 for I-FRAMEs.

The serial-to-parallel converter receive data bus will be read by the controller 101 every receive clock cycle. The five control bytes (IDL, BSC, CRC, VLF, and EOF) and data will be removed from the body of the frame. If any error bits are set, the data is ignored and an error is logged to a link error counter in the host memory stack.

Data are loaded into a receive memory FIFO 135 under microcode control of the link receive control PLA 139. The most significant bit of the first byte of a received frame informs 601 the protocol controller 101 whether it is an I-FRAME or a C-FRAME. The value of NE which was received in the header is passed to the link transmit control PLA 135 to be used for determining if there is space for data at the other end of the link. This is also only sent if the above three conditions were met.

I-FRAMEs are assembled 605 in the buffer pointed to by VR until an EOF is received from the Physical Layer control. A CRC is computed as the bytes are received, and checked for agreement with the received CRC when the frame ends. In the preferred embodiment, it is intended to detect any two errors on the line in order to achieve a satisfactory rate of undetected errors. In most implementations, the state of the CRC register at any time represents the current remainder. The final state of the CRC register, which is the final remainder, becomes the frame check word (FCW) and is appended to the data. The receiver uses the entire received sequence including the FCW as the dividend. Barring any errors, the remainder at the receiver will be zero because the remainder at the transmitter was used as the FCW. In practice, a slight modification is made to guarantee that the initial and final contents of the CRC register are not equal (to detect missing frame delimiters). The CRC register is initialized to one, the remainder is inverted before transmitting, and the receiver checks for a constant remainder when there are no errors. To simplify the parallel implementation, the preferred embodiment uses a circuit in which the state of the CRC register does not represent the current remainder. The input and output sequences, however, are identical (the same division is performed). Consequently, the FCW is not the remainder, and therefore, the receiver cannot include it in the division. The FCW is merely a "signature" which the receiver recomputes and verifies. In this implementation the initial and final contents of the CRC register are not equal so that the absence of a frame delimiter will be detected.

Frames with bad CRC's or frames which exceed sixteen bytes of data or frames which have a link error associated with them are discarded. I-FRAMEs that are received correctly are checked for sequence errors by comparing the value of VR with the NS field in the frame's header. If they do not match and the reject state bit (RJS) is not set, the REJ flag is set and will cause the transmitter to send a reject frame back to the remote DTE; RJS is also set, and no further reject frames are sent until after a frame is received in sequence (which clears RJS).

Frames that are good and in sequence are made available to the host receive controller 131. The RX_FULL (Vr) bit is set for a filled buffer to allow the receive DMA to empty the buffer. The length of the frame, counted as bytes were received, is stored in the RX_CNTR for that buffer and VR is incremented.

The value of NE in the received I-FRAME header can be used to acknowledge outstanding frames as demonstrated in **FIGURES 8A** and **8B**, such as when data are being sent in both directions at the same time. Since I-FRAMEs have precedence over C-FRAMEs unless a control flag bit is set, the only indication that data have been received correctly at the remote DTE is the advancement of NE. NE moves as frames are removed from the remote DTE, so it is implied that the data was received correctly and, therefore, can be acknowledged. Thus, if NE passes VA, those frames numbered VA through NE-1 are acknowledged, and VA is set equal to NE. If any frames remain unacknowledged, the transmit timer is restarted. If no unacknowledged frames remain, the transmit timer is cleared. If no frames were acknowledged (NE<=VA), the timer is left unchanged. In all cases, the window state variable VW is updated to the value of NE.

Referring back to **FIGURE 8**, the protocol controller 101 also processes 607 incoming C-FRAMEs, thereby providing RECEIVE MODE flow control and error recovery at the Link Layer level.

C-FRAMES are disassembled into two 8-bit latches, CL1 and CL2. If the CRC computed as the frame was received is not equal to the received CRC, or if there were link errors associated with the frame, the frame is discarded without further action. If the CRC matches, the functions indicated by the various bits in the latches are executed as follows:

CL1.REJ     SET VS = NR.
CL1.QRY     SET QRS TRANSMIT FLAG.
CL1.QRS     CLEAR QS, SET VS = NR.
CL1.RLR     PULSE RLR PIN ON CHIP, SET RRA TRANSMIT FLAG.
CL2.RSN     SET RSS STATE, INTERRUPT MICROPROCESSOR.
CL2.RRA     CLEAR RRS.
CL2.RSA     CLEAR RSS, INTERRUPT MICROPROCESSOR.

Outstanding I-FRAMEs from the transmitter DTE are acknowledged based on the NR field in CL2 in the same manner as was done for NE for I-FRAMEs. The window state variable, VW, is set to NE in CL1. The receipt of any frame which attempts to acknowledge a previously acknowledged frame causes the RSN flag to be set. Since this condition cannot be corrected by re-transmitting the frame, the data transfer must be aborted, and the link resynchronized.

C-FRAMEs that are received with a data part are discarded. It is assumed that a byte framing error occurred. The same procedure is followed as with a CRC error.

## SYNCHRONIZATION AND RE-SYNCHRONIZATION

In order for two DTE's to communicate successfully, they must be synchronized.

Re-synchronization occurs on power-up or any time that two protocol controllers 101 get out of sync during operation.

During re-synchronization, the state variables of the receiving DTE protocol controller 101 are synchronized with those of the transmitting DTE protocol controller 101. Sending a C-FRAME with the RSN bit set causes the receiving DTE to set RSS and clear all counters and flags. Receiving RSN or RSA causes an interrupt to be sent to the microprocessor. Sending or receiving RSA clears RSS. While RSS is set, any received I-FRAME is discarded, and received C-FRAMEs are only processed for RSN, RSA, RLR, and RRA.

## REMOTE LINK RESET (RLR) FUNCTION

The RLR function provides a low level signalling capability across a link and can be used when normal data communication does not seem to be working. The intent is that this signal be used to reset the remote DTE.

The transmitting DTE asserts RLR in a C-FRAME sent to the remote DTE. The remote protocol controller 101 acknowledges receipt of the RLR by returning an RRA frame and then sends a pulse to the RLR pin on the receiving protocol controller 101. This dedicated pin can be sensed by whatever circuitry may need to be reset. The pulse on the RLR pin is delayed until after the RRA is sent, in case the reset affects the protocol controller itself. The RLR pin will be de-asserted if the protocol controller 101 is reset.

## EXAMPLE OF DATA FLOW

The following TABLE II shows an example of a data transfer showing the interaction of the various state variables in controlling flow, and recovering from link errors. Note that only one half-duplex channel is shown. Since the protocol is symmetrical, the operation for the reverse channel is the same. Some of the sequences of actions (e.g., sending of frames and the transfer of information to the hosts, have been stretched to better show the operation of the transmit window, timer, and rejecting of out of sequence frames.

## TABLE II

| | Transmit Side | | | Receive Side | | |
|---|---|---|---|---|---|---|
| | VW | VA | VS | | VR | VE |
| 1 | 0 | 0 | 0 | | 0 | 0 |
| 2 | | | | ---- I frame, VS = 0 ---------> ok | | |
| 3 | 0 | 0 | 1 | | 1 | 0 |
| 4 | | | | ---- I frame, VS = 1 ---------> ok | | |
| 5 | 0 | 0 | 2 | | 2 | 0 |
| 6 | | | | <--- C frame, VR = 2, VE = 0 --- | | |
| 7 | 0 | 2 | 2 | (acknowledges frames 0,1, no window change) | 2 | 0 |
| 8 | | | | --- I frame, VS = 2 ----------> ok | | |
| 9 | 0 | 2 | 3 | | 3 | 0 |
| | | | | . . . etc. . . | | |
| 10 | | | | --- I frame, VS = 6 ----------> ok | | |
| 11 | 0 | 2 | 7 | | 7 | 0 |
| | | | | window is now closed. | | |
| 12 | | | | frame 0 xfer to host | | |
| | | | | | 7 | 1 |
| 13 | | | | <--- C frame, VR = 7, VE = 1 --- | | |
| 14 | 1 | 7 | 7 | (acknowledges frames 2-6, opens window) | | |
| 15 | | | | ---- I frame, VS = 7 -- *hit* ---> | CRC bad | |
| 16 | 1 | 7 | 0 | window is closed | 7 | 1 |
| 17 | | | | timer expires | | |
| 18 | 1 | 7 | 0 | ---- C frame (Query) -------------> | | |
| 19 | 1 | 7 | 0 | | 7 | 1 |
| 20 | | | | <----- C frame (Q Res) VR=7, VE=1 -- | | |
| 21 | 1 | 7 | 7 | (VS adjusted, window open) | 7 | 1 |
| 22 | | | | ---- I frame (re-tx) VS = 7 ----> ok | | |
| 23 | 1 | 7 | 0 | window is closed | 0 | 1 |
| 24 | | | | frames 1 - 5 xfer to host | | |
| | | | | | 0 | 6 |
| 25 | | | | <---- C frame, VR = 0, VE = 6----- | | |
| 26 | 6 | 0 | 0 | (acknowledges frame 7, opens window) | 6 | 0 |
| 27 | | | | ---- I frame, VS = 0 -- *hit* --- | CRC bad | |
| 28 | 6 | 0 | 1 | | 0 | 6 |

| 29 | | | | ---- I frame, VS = VS = 1 --------> | | | CRC ok, sequence error; Discard frame and set REJ, RJS to 1 |
| 30 | 6 | 0 | 2 | | | | |
| 31 | | | | ---- I frame, VS = 2 -----------> | | | sequence error, discard frame |
| 32 | 6 | 0 | 3 | >> simultaneously << | | | |
| 33 | | | | <---- C frame (Reject) VR=0, VE=6 -- | 0 | 6 | |
| 34 | 6 | 0 | 0 | VS updated, window still open | | | |
| 35 | | | | ---- I frame re-transmit VS=0 ----> ok, clear RJS | | | |
| | | | | | 1 | 6 | |
| 36 | 6 | 4 | 1 | | | | |
| 37 | | | | ---- I frame, VS = 1 -------------> ok | | | |
| 38 | 6 | 4 | 2 | | 2 | 6 | |

. . . etc. . .

The example of TABLE II shows that after a RSN, all pointers are set to zero (1). When the transmitter transmits frame zero (2), it updates VS to one and, when the frame is received properly, the remote updates VR to one (3). The same happens for frame one (4, 5).

The remote then returns a C-FRAME (6), indicating the new value of VR which acknowledges frames zero and one and moves VS to two (7). In this step, the window is not changed since the remote did not change VE.

Frames two through six are sent and received properly (8-10). The window is closed because the remote has seven outstanding frames (11).

After the remote has frame zero read by it's host DTE (12), it returns a C-FRAME with VR=7 and VE=1 (13).This acknowledges frames two through six and opens the window for one more frame (14).

Frame seven is then transmitted but has an error in transmission (15). The fact that frame seven was transmitted closes the window (16). But, since there was an error in this part of the example, there will not be an acknowledge. The transmitter timer will expire (17), causing a QRY to be transmitted (18). The QRS from the remote will indicate that the next frame expected is frame seven (20). The local device will then reset VS to seven and retransmit frame seven (21, 22). The window is then closed (23). Frames one through five are then read by the remote host DTE (24). A C-FRAME with VR=0 and VE=6 is sent by the remote (25). This acknowledges frame seven and opens the window (26).

Frame zero is then transmitted and an exemplary error is assumed to occur during its receipt (27). This means that VS is updated but VR is not (28). Frame one is then sent with no error (29). VS is again updated (30). The remote detects a good frame but out of sequence. It discards the frame and sets a reject state and sends REJ (30). Frame two is then transmitted at the same time as the REJ is sent from the remote (31-33). Frame two is discarded due to being out of sequence (31). When the REJ is received, the local resets VS=0 as indicated by the REJ (34) and begins by retransmitting frame zero (35). When frame zero is received correctly, the reject state of the remote is cleared and normal operation is resumed (36-38).

The foregoing description of the preferred embodiment of the present invention has been presented for purposes of illustration and description. It is not intended to be exhaustive or to limit the invention to the precise form disclosed. Obviously, many modifications and variations will be apparent to practitioners skilled in this art. Similarly, any process steps described might be interchangeable with other steps in order to achieve the same result. The embodiment was chosen and described in order to best explain the principles of the invention and its practical application to thereby enable others skilled in the art to understand the invention for various embodiments and with various modifications as are suited to the particular use contemplated. It is intended that the scope of the invention be defined by the claims appended hereto.

## Claims

1. A method for controlling data transmission using an open systems interconnection model, comprising:
   providing link layer sliding window protocol formatting of information to be transmitted from a transmitter to a receiver and from the receiver to a host,
   the link layer sliding window protocol including control frames sent from the receiver to the transmitter, which contain a state variable (VR) indicating a frame of information to be next transmitted from the transmitter to the receiver, characterised in that the control frames contain a further state variable (VE) indicating a frame of information to be next transferred from the receiver to the host, whereby said protocol provides transmission flow control and error control.

2. A method according to claim 1, characterised in that the said formatting for error control further comprises providing fully decoded error control information.

3. A method according to claim 1 or claim 2, characterised in that the said fully decoded error control information includes discrete indicator bits in a frame, each said indicator bit representing different control information.

4. A method according to claim 3, characterised in that the said frame is a control frame.

5. A method according to claim 3 or claim 4, characterised in that the said fully decoded error control information includes an indicator that a frame was received out of sequence.

6. A method according to any of Claims 3 to 5, characterised in that the said fully decoded error control information includes an acknowledgement waiting time indicator that the transmitting node has exceeded a predetermined time period waiting for a previously transmitted frame to be acknowledged.

7. A method according to Claim 6, characterised in that said fully decoded error control information includes an indicator that the frame being transmitted is a response to the said acknowledgment waiting time indicator.

8. A method according to any of Claims 3 to 7, characterised in that the said fully decoded error control information includes a link node resynchronisation indicator that resynchronises link nodes.

9. A method according to Claim 8, characterised in that the said fully decoded error control information includes a link node resynchronisation indicator acknowledgment.

10. A method according to any of Claims 3 to 9, characterised in that the step of providing sliding window error control further comprises providing an indicator which will reset a receiving node complementary network layer controller.

11. A method according to Claim 10, characterised in that the said step of providing sliding window error control further comprises providing an indicator which will acknowledge the receipt of said indicator which will reset a receiving node complementary network controller.

12. A method according to any preceding Claim, characterised in that said step of providing sliding window flow control further comprises providing state variable information which identifies a next receiving node complementary link layer protocol controller buffer to be emptied.

13. A method according to Claim 12, characterised in that said step of providing state variable signal information further comprises providing state variable information which prevents a transmitting node link layer protocol controller from over-running a receiving node complementary link layer protocol controller input buffer by indicating the receiving node input buffer status to the transmitting node by incrementing said state variable when the receiving node input buffer has been emptied into the receiving node data terminal equipment.

14. A method according to Claim 13, characterised in that said step of providing state variable signal information further comprises providing sliding window error control if there is continuous bidirectional information traffic on the link by said receiving node complementary link layer protocol controller incrementing said state variable to implicitly acknowledge correct receipt of information frames by said receiving node.

15. A protocol controller device (110) for data communication equipment, coupling a first input/output device connected to local data terminal equipment to a second input/output device connected to a communication link, characterised in that it comprises first port means (103, 103', 107, 111) for transfer of information to and from the first input/output device, second port means (117, 119) for transfer of information to and from the second input/output device, switching means (125, 127) coupled to the said first port means for controlling the transfer of information therethrough, information holding means (113, 115) coupled to the said first and second port means (103, 103', 107, 111; 117, 119) for pipelining information through the device (110), and control means (121, 123) coupled to the said information holding means (113, 115) and to the said second port means (117, 119) and operable to effect link layer sliding window protocol formatting of the said information including control frames containing state variables (VR, VE) indicating frames of information to be next transferred from the transmitter to the receiver, and from the receiver to the host, whereby to provide transmission error control and transmission flow control.

16. A protocol controller device according to Claim 15, characterised in that said first port means further comprises control port means (107) for controlling access to said controlling means and transferring said information to and from said controlling means from said first input/output means, and device port means (111) for coupling said holding means to said first input/output means.

17. A protocol controller device according to Claim 15 or Claim 16, characterised in that said second port means comprises transmit port means (119, 123) for transferring said information to said second input/output means, and receive port means (117, 121) for transferring said information from said second input/output means.

18. A protocol controller device according to Claim 15, 16 or 17, characterised in that said switching means (125, 127), control port means (107) and device port means (111) further comprises first programmable means (131) coupled to said first input/output means and said information holding means (113, 115), and programmed for providing said controlling functions, first synchroniser means (201) coupling said first programmable means to said transmit port means (135) for synchronising said first input/output means clock domain and said second input/output means clock domain, and second synchroniser means (203) coupling said first programmable means to said receive port means, synchronising said second port means input clock domain to said first input/output means clock domain.

19. A protocol controller device according to any of Claims 15 to 18, characterised in that said transmit porting means further comprises second programmable means (131) coupling said information holding means (113, 137) to said second input/output means.

20. A protocol controller device according to any of Claims 15 to 18, characterised in that said receive porting means further comprises third programmable means, coupling said information holding means (113, 137) to said second input/output means.

## Patentansprüche

1. Ein Verfahren zum Steuern der Datenübertragung unter Verwendung eines Verbindungsmodells für offene Systeme, mit folgenden Verfahrensschritten:
Schaffen einer Verbindungsschicht-Gleitfensterprotokoll-Formatierung von Informationen, die von einem Sender an einen Empfänger und von einem Empfänger an einen Host übertragen werden sollen,
wobei das Verbindungsschicht-Gleitfensterprotokoll Steuerungsrahmen einschließt, die von dem Empfänger an den Sender gesendet werden, die eine Zustandsvariable (VR) einschließen, die einen Informationsrahmen anzeigt, der als nächstes von dem Sender an den Empfänger übertragen werden soll,
dadurch gekennzeichnet,
daß die Steuerungsrahmen eine weitere Zustandsvariable (VE) enthalten, die einen Informationsrahmen anzeigen, der als nächstes vom Empfänger an den Host übertragen werden soll, wobei das Protokoll eine Übertragungsflußsteuerung und Fehlersteuerung schafft.

2. Verfahren nach Anspruch 1, dadurch gekennzeichnet,
daß die Formatierung für die Fehlersteuerung ferner das Bereitstellen von vollständig decodierten Fehlersteuerungsinformationen umfaßt.

3. Verfahren nach Anspruch 1 oder 2, dadurch gekennzeichnet,
daß die vollständig decodierten Fehlersteuerungsinformationen diskrete Anzeige-Bits in einem Rahmen einschließen, wobei jedes Anzeige-Bit unterschiedliche Steuerungsinformationen darstellt.

4. Verfahren nach Anspruch 3, dadurch gekennzeichnet,
daß der Rahmen ein Steuerungsrahmen ist.

5. Ein Verfahren nach Anspruch 3 oder 4, dadurch gekennzeichnet,
daß die vollständig decodierten Fehlersteuerungsinformationen einen Anzeiger einschließen, daß ein Rahmen außerhalb einer Folge empfangen wurde.

6. Ein Verfahren gemäß irgendeinem der Ansprüche 3 bis 5, dadurch gekennzeichnet,
daß die vollständig decodierten Fehlersteuerungsinformationen einen Bestätigungswartezeitanzeiger einschließen, daß der übertragende Knoten eine vorbestimmte Zeitdauer beim Warten auf die Bestätigung eines vorher übertragenen Rahmens überschritten hat.

7. Ein Verfahren gemäß Anspruch 6, dadurch gekennzeichnet,
daß die vollständig decodierten Fehlersteuerungsinformationen einen Anzeiger einschließen, daß der Rahmen, der übertragen wird, eine Antwort auf den Bestätigungswartezeitanzeiger ist.

8. Ein Verfahren gemäß irgendeinem der Ansprüche 3 bis 7, dadurch gekennzeichnet,
daß die vollständig decodierten Fehlersteuerungsinformationen einen Verbindungsknoten-Resynchronisationsanzeiger einschließen, der die Verbindungsknoten resynchronisiert.

9. Ein Verfahren gemäß Anspruch 8, dadurch gekennzeichnet,
daß die vollständig decodierten Fehlersteuerungsinformationen eine Verbindungsknoten-Resynchronisations-Anzeige-Bestätigung einschließen.

10. Ein Verfahren nach irgendeinem der Ansprüche 3 bis 9, dadurch gekennzeichnet,
daß der Schritt des Bereitstellens einer Gleitfensterfehlersteuerung ferner das Bereitstellen eines Anzeigers einschließt, der einen Empfangsknoten einer komplementären Netzwerkschichtsteuerung rücksetzen wird.

11. Ein Verfahren nach Anspruch 10, dadurch gekennzeichnet,
daß der Schritt des Bereitstellens der Gleitfensterfehlersteuerung ferner das Bereitstellen eines Anzeigers umfaßt, der den Empfang des Anzeigers bestätigt, der einen Empfangsknoten einer komplementären Netzwerksteuerung zurücksetzt.

12. Ein Verfahren gemäß irgendeinem der vorhergehenden Ansprüche, dadurch gekennzeichnet,
daß der Schritt des Bereitstellens einer Gleitfensterflußsteuerung ferner das Bereitstellen von Zustandsvariableninformationen umfaßt, die einen nächsten zu entleerenden Puffer eines Empfangsknotens einer komplementären Verbindungsschichtprotokollsteuerung identifizieren.

13. Ein Verfahren nach Anspruch 12, dadurch gekennzeichnet,
daß der Schritt des Bereitstellens von Zustandsvariablensignalinformationen ferner das Bereitstellen von Zustandsvariableninformationen umfaßt, die eine Verbindungsschichtprotokollsteuerung eines Übertragungsknotens daran hindern, einen Eingangspuffer eines Empfangsknotens einer komplementären Verbindungsschichtprotokollsteuerung zu überlaufen, durch Anzeigen des Eingangspufferstatus des Empfangsknotens an den den Übertragungsknoten durch Erhöhen der Zustandsvariable, wenn der Eingangspuffer des Empfangsknotens in das Datenterminalgerät des Empfangsknotens entleert wurde.

14. Ein Verfahren gemäß Anspruch 13, dadurch gekennzeichnet,
daß der Schritt des Bereitstellens von Zustandsvariablensignalinformationen ferner das Bereitstellen einer Gleitfensterfehlersteuerung umfaßt, wenn ein kontinuierlicher bidirektionaler Informationsverkehr auf der Verbindung existiert, durch Erhöhen der Zustandsvariable durch die komplementäre Verbindungsschichtprotokollsteuerung des Empfangsknotens, um implizit den korrekten Empfang von Informationsrahmen durch den Empfangsknoten zu bestätigen.

15. Ein Protokollsteuerungsgerät (110) für ein Datenkommunikationsgerät, das ein erstes Eingabe/Ausgabe-Gerät, das mit lokalen Datenterminalgeräten verbunden ist, mit einem zweiten Eingabe/Ausgabe-Gerät, das mit einer Kommunikationsverbindung verbunden ist, verbindet,
dadurch gekennzeichnet, daß es folgende Merkmale umfaßt:
eine erste Anschlußeinrichtung (103, 103′, 107, 111) zur Übertragung von Informationen zu und von dem ersten Eingabe/Ausgabe-Gerät,
eine zweite Anschlußeinrichtung (117, 119) zur Übertragung von Informationen zu und von dem zweiten Eingabe/Ausgabe-Gerät,
eine Schalteinrichtung (125, 127), die mit der ersten Anschlußeinrichtung zur Steuerung der Übertragung von Informationen durch diese verbunden ist,
eine Informationshalteeinrichtung (113, 115), die mit der ersten und der zweiten Anschlußeinrichtung (103, 103′, 107, 111; 117, 119) zum Weiterleiten von Informationen nach dem Pipeline-Verfahren durch das Gerät (110) verbunden ist, und
eine Steuerungseinrichtung (121, 123), die mit der Informationshalteeinrichtung (113, 115) und der zweiten Anschlußeinrichtung (117, 119) verbunden ist, und wirksam ist, um eine Formatierung der Informationen, die Kontaktrahmen einschließt, die Zustandsvariable (VR, VE) enthält, die Informationsrahmen anzeigen, die als nächste von dem Sender an den Empfänger und von dem Empfänger an den Host übertragen werden sollen, gemäß dem Verbindungsschichtgleitfensterprotokoll zu bewirken, wodurch eine Übertragungsfehlersteuerung und eine Übertragungsflußsteuerung geschaffen wird.

16. Ein Protokollsteuerungsgerät gemäß Anspruch 15, dadurch gekennzeichnet,
daß die erste Anschlußeinrichtung ferner eine Steuerungsanschlußeinrichtung (107) zum Steuern des Zugriffs auf die Steuerungseinrichtung und zum Übertragen der Informationen an und von der Steuerungseinrichtung von der ersten Eingabe/Ausgabe-Einrichtung, und eine Gerätanschlußeinrichtung (111) zum Verbinden der Halteinrichtung mit der ersten Eingabe/Ausgabe-Einrichtung umfaßt.

17. Ein Protokollsteuerungsgerät gemäß Anspruch 15 oder 16, dadurch gekennzeichnet,
daß die zweite Anschlußeinrichtung eine Übertragungsanschlußeinrichtung (119 , 123) zum Übertragen der Informationen an die zweite Eingabe/Ausgabe-Einrichtung, und eine Empfangsanschlußeinrichtung (117, 121) zum Übertragen der Informationen von der zweiten Eingabe/Ausgabe-Einrichtung umfaßt.

18. Ein Protokollsteuerungsgerät gemäß Anspruch 15, 16 oder 17, dadurch gekennzeichnet,
daß die Schaltereinrichtung (125, 127), die Steuerungsanschlußeinrichtung (107) und die Gerätanschlußeinrichtung (111) ferner eine erste programmierbare Einrichtung (131), die mit der ersten Eingabe/Ausgabe-Einrichtung und der Informationshalteeinrichtung (113, 115) verbunden ist, und programmiert ist, um die Steuerungsfunktionen bereitzustellen, eine erste Synchronisationseinrichtung (201), die die erste programmierbare Einrichtung mit der Übertragungsanschlußeinrichtung (135) zur Synchronisation des Taktbereichs der ersten Eingabe/Ausgabe-Einrichtung und des Taktbereichs der zweiten Eingabe/Ausgabe-Einrichtung verbunden ist, und eine zweite Synchronisationseinrichtung (203), die die erste programmierbare Einrichtung mit der Empfangsanschlußeinrichtung verbindet, und den Eingangstaktbereich der zweiten Anschlußeinrichtung mit dem Taktbereich der ersten Eingabe/Ausgabe-Einrichtung synchronisiert, umfassen.

19. Ein Protokollsteuerungsgerät gemäß irgendeinem der Ansprüche 15 bis 18, dadurch gekennzeichnet,
daß die Übertragungsanschlußeinrichtung ferner eine zweite programmierbare Einrichtung (131) umfaßt, die die Informationshalteeinrichtung (113, 137) mit der zweiten Eingabe/Ausgabe-Einrichtung verbindet.

20. Ein Protokollsteuerungsgerät gemäß irgendeinem der Ansprüche 15 bis 18, dadurch gekennzeichnet,
daß die Empfangsanschlußeinrichtung ferner eine dritte programmierbare Einrichtung umfaßt, die die Informationshalteeinrichtung (113, 137) mit der zweiten Eingabe/Ausgabe-Einrichtung verbindet.

## Revendications

1. Procédé de commande d'une transmission de données en utilisant un modèle d'interconnexion de systèmes ouverts, comprenant :
la fourniture d'un formatage, selon un protocole de fenêtre coulissante de couche liaison, d'une information qui doit être transmise depuis un émetteur jusqu'à un récepteur et depuis le récepteur jusqu'à un hôte ;
le protocole de fenêtre coulissante de couche liaison incluant des trames de commande envoyées depuis le récepteur jusqu'à l'émetteur, lesquelles contiennent une variable d'état (VR) indiquant une trame d'information qui doit être transmise par la suite depuis l'émetteur jusqu'au récepteur, caractérisé en ce que les trames de commande contiennent une autre variable d'état (VE) indiquant une trame d'information qui doit être transférée par la suite depuis le récepteur jusqu'à l'hôte, de telle sorte que ledit protocole assure une commande de débit de transmission et un contrôle d'erreur.

2. Procédé selon la revendication 1, caractérisé en ce que ledit formatage pour un contrôle d'erreur comprend en outre la fourniture d'une information de contrôle d'erreur complètement décodée.

3. Procédé selon la revendication 1 ou 2, caractérisé en ce que ladite information de contrôle d'erreur complètement décodée inclut des bits indicateurs discrets contenus dans une trame, chaque tel bit indicateur représentant une information de contrôle différente.

4. Procédé selon la revendication 3, caractérisé en ce que ladite trame est une trame de commande.

5. Procédé selon la revendication 3 ou 4, caractérisé en ce que ladite information de contrôle d'erreur complètement décodée inclut un indicateur consistant en ce qu'une trame a été reçue en dehors d'une séquence.

6. Procédé selon l'une quelconque des revendications 3 à 5, caractérisé en ce que ladite information de contrôle d'erreur complètement décodée inclut un indicateur de temps d'attente d'accusé de réception qui indique que le noeud de transmission a excédé une période temporelle prédéterminée d'attente d'accusé de réception d'une trame transmise précédemment.

7. Procédé selon la revendication 6, caractérisé en ce que ladite information de contrôle d'erreur complètement décodée inclut un indicateur qui indique que la trame qui est en train d'être transmise est une réponse audit indicateur de temps d'attente d'accusé de réception.

8. Procédé selon l'une quelconque des revendications 3 à 7, caractérisé en ce que ladite information de contrôle d'erreur complètement décodée inclut un indicateur de resynchronisation de noeud de liaison qui resynchronise des noeuds de liaison.

9. Procédé selon la revendication 8, caractérisé en ce que ladite information de contrôle d'erreur complètement décodée inclut un accusé de réception d'indicateur de resynchronisation de noeud de liaison.

10. Procédé selon l'une quelconque des revendications 3 à 9, caractérisé en ce que l'étape de fourniture d'un contrôle d'erreur à fenêtre coulissante comprend en outre la fourniture d'un indicateur qui remettra à l'état initial un contrôleur de couche de réseau complémentaire de noeuds de réception.

11. Procédé selon la revendication 10, caractérisé en ce que ladite étape de fourniture d'un contrôle d'erreur de fenêtre coulissante comprend en outre la fourniture d'un indicateur qui accusera réception de la réception dudit indicateur qui remettra à l'état initial un contrôleur de réseau complémentaire de noeuds de réception.

12. Procédé selon l'une quelconque des revendications précédentes, caractérisé en ce que ladite étape de fourniture d'une commande de débit de fenêtre coulissante comprend en outre la fourniture d'une information de variable d'état qui identifie un tampon de contrôleur de protocole de couche liaison complémentaire de noeuds de réception suivant qui doit être vidé.

13. Procédé selon la revendication 12, caractérisé en ce que ladite étape de fourniture d'une information de signal de variable d'état comprend en outre la fourniture d'une information de variable d'état qui empêche qu'un contrôleur de protocole de couche liaison de noeuds d'émission ne mette en surfonctionnement un tampon d'entrée de contrôleur de protocole de couche liaison complémentaire de noeuds de réception en indiquant le statut de tampon d'entrée de noeud de réception au noeud d'émission en incrémentant ladite variable d'état lorsque le tampon d'entrée de noeud de réception a été vidé dans l'équipement de terminal de données de noeud de réception.

14. Procédé selon la revendication 13, caractérisé en ce que ladite étape de fourniture d'une information de signal de variable d'état comprend en outre la fourniture d'un contrôle d'erreur de fenêtre coulissante s'il y a un trafic d'information bidirectionnel continu sur la liaison au moyen dudit contrôleur de protocole de couche liaison complémentaire de noeuds de réception qui incrémente ladite variable d'état pour corriger par accusé de réception implicite la réception de trames d'information par ledit noeud de réception.

15. Dispositif de contrôleur de protocole (110) pour un équipement de communication de données, qui couple un premier dispositif d'entrée/sortie connecté à un équipement de terminal de données local à un second dispositif d'entrée/sortie connecté à une liaison de communication, caractérisé en ce qu'il comprend un premier moyen de port (103, 103', 107, 111) pour transférer une information vers et depuis le premier dispositif d'entrée/sortie, un second moyen de port (117, 119) pour transférer une information vers et depuis le second dispositif d'entrée/sortie, un moyen de commutation (125, 127) couplé audit premier moyen de port pour commander le transfert d'une information au travers, un moyen de blocage d'information (113, 115) couplé auxdits premier et second moyens de port (103, 103', 107, 111 ; 117, 119) pour faire passer en pipeline une information au travers du dispositif (110) et un moyen de commande (121, 123) couplé audit moyen de blocage d'information (113, 115) et audit second moyen de port (117, 119) et pouvant fonctionner pour mettre en oeuvre un protocole à fenêtre coulissante à couche liaison qui formate ladite information, y compris des trames de commande contenant des variables d'état (VR, VE) indiquant des trames d'information qui doivent être transférées ensuite depuis l'émetteur jusqu'au récepteur et depuis le récepteur jusqu'à l'hôte et pour ainsi assurer un contrôle d'erreur de transmission et une commande de débit de transmission.

16. Dispositif de contrôleur de protocole selon la revendication 15, caractérisé en ce que ledit premier moyen de port comprend en outre un moyen de port de commande (107) pour commander un accès audit moyen de commande et pour transférer ladite information vers et depuis ledit moyen de commande depuis ledit premier moyen d'entrée/sortie, et un moyen de port de dispositif (111) pour coupler ledit moyen de blocage audit premier moyen d'entrée/sortie.

17. Dispositif de contrôleur de protocole selon la revendication 15 ou 16, caractérisé en ce que ledit second moyen de port comprend un moyen de port d'émission (119, 123) pour transférer ladite information audit second moyen d'entrée/sortie et un moyen de port de réception (117, 121) pour transférer ladite information depuis ledit second moyen d'entrée/sortie.

18. Dispositif de contrôleur de protocole selon la revendication 15, 16 ou 17, caractérisé en ce que ledit moyen de commutation (125, 127), ledit moyen de port de commande (107) et ledit moyen de port de dispositif (111) comprennent en outre un premier moyen programmable (131) couplé audit premier moyen d'entrée/sortie et audit moyen de blocage d'information (113, 115) et programmé pour assurer lesdites fonctions de commande, un premier moyen de synchroniseur (201) qui couple ledit premier moyen programmable audit moyen de port d'émission (135) pour synchroniser un domaine d'horloge dudit premier moyen d'entrée/sortie et un domaine d'horloge dudit second moyen d'entrée/sortie et un second moyen de synchroniseur (203) qui couple ledit premier moyen programmable audit moyen de port de réception, qui synchronise un domaine d'horloge d'entrée dudit second moyen de port par rapport au domaine d'horloge dudit premier moyen d'entrée/sortie.

19. Dispositif de contrôleur de protocole selon l'une quelconque des revendications 15 à 18, caractérisé en ce que ledit moyen de port d'émission comprend en outre un second moyen programmable (131) qui couple ledit moyen de blocage d'information (113, 137) audit second moyen d'entrée/sortie.

20. Dispositif de contrôleur de protocole selon l'une quelconque des revendications 15 à 18, caractérisé en ce que ledit moyen de port de réception comprend en outre un troisième moyen programmable qui couple ledit moyen de blocage d'information (113, 137) audit second moyen d'entrée/sortie.

OSI DATA ENCAPSULATION/PASSING BY LAYERS

**FIG 1** *(PRIOR ART)*

EP 0 310 360 B1

EP 0 310 360 B1

*on* $\begin{matrix}\text{I}\\\text{D}\\\text{L}\end{matrix}$ o o o $\begin{matrix}\text{I}\\\text{D}\\\text{L}\end{matrix}$ $\begin{matrix}\text{B}\\\text{S}\\\text{C}\end{matrix}$ | C FRAME | $\begin{matrix}\text{B}\\\text{S}\\\text{C}\end{matrix}$ | C FRAME | $\begin{matrix}\text{B}\\\text{S}\\\text{C}\end{matrix}$ | I FRAME | $\begin{matrix}\text{B}\\\text{S}\\\text{C}\end{matrix}$ | C FRAME | $\begin{matrix}\text{B}\\\text{S}\\\text{C}\end{matrix}$

| I FRAME | $\begin{matrix}\text{B}\\\text{S}\\\text{C}\end{matrix}$ | I FRAME | $\begin{matrix}\text{B}\\\text{S}\\\text{C}\end{matrix}$ | C FRAME | $\begin{matrix}\text{B}\\\text{S}\\\text{C}\end{matrix}$ | I FRAME | $\begin{matrix}\text{B}\\\text{S}\\\text{C}\end{matrix}$

# FIG 2 *(PRIOR ART)*

FIG 3

FIG 4

INFORMATION FRAMES:

FIXED LENGTH DATA FRAME (X DATA BYTES)

| BSC | HEADER | USER DATA | CRC | EOF | BSC |

**FIG 5A** (PRIOR ART)

SHORT DATA FRAME (LESS THAN X DATA BYTES)

| BSC | HEADER | < X BYTES OF USER DATA | CRC | EOF | BSC |

**FIG 5B** (PRIOR ART)

CONTROL FRAMES:

| BSC | HEADER | CRC | EOF | BSC |

**FIG 5C**

MSB | O | EOS | NS | VE | LSB

**FIG 5D**

MSB | 1 | REJ | QRY | QRS | RLR | VE | LSB

| LID | RSN | RSA | RRA | VR | LSB

TRANSMIT
( START )

TIMEOUT — Y

N

513

CONTROL
CHARACTER — Y

N

DATA
AVAILABLE — N

Y

ROOM
ON
REMOTE — N

Y

QUERY
STATE — Y

N

501

TRANSMIT
DATA HEADER
START TIMER

TRANSMIT
DATA
BYTE

503

PARITY
ERROR — Y

N

MORE
DATA — Y

TRANSMIT
IDLES

N

RESET

Y

N

TO
FIG 6B

TO FIG 6C

# FIG 6A

FIG 6B

EP 0 310 360 B1

**FIG 6C**

SHORT FRAME — N

Y

507 {
TRANSMIT CRC BYTE 1

TRANSMIT CRC BYTE 2

TRANSMIT VARIABLE LENGTH FRAME
}

TRANSMIT CRC BYTE 1

TRANSMIT CRC BYTE 2

} 505

RECEIVED REJECT OR QUERY RSPNS — Y

N

509 {

RECEIVED RRA — Y / N

RECEIVED QRS — Y / N

RECEIVED RRA — Y / N

RECEIVED RRA — Y / N

TRANSMIT END OF FRAME RESET REMOTE RESET STATE

TRANSMIT END OF FRAME

TRANSMIT END OF FRAME VS := NR

TRANSMIT END OF FRAME RESET REMOTE RESET STATE VS := NR

TRANSMIT END OF FRAME · RESET QUERY STATE VS := NR

TRANSMIT END OF FRAME RESET QUERY STATE RESET REMOTE RESET STATE VS := NR

EP 0 310 360 B1

FIG 7A

FIG 7B

ACKNOWLEDGE FRAMES

FIG 8A

EP 0 310 360 B1

| | BUFFER [0] | BUFFER [1] | BUFFER [2] | BUFFER [3] | BUFFER [4] | BUFFER [5] | BUFFER [6] | BUFFER [7] |
|---|---|---|---|---|---|---|---|---|
| ACKNOWLEDGE IF NOT CONTROL | | | | | | | × | |
| ACKNOWLEDGE IF CONTROL | | | | | | | × | × |
| SENT | × | | | | | | × | × |
| FULL | × | × | × | × | × | | × | × |

VS → BUFFER [1] BUFFER [2]

NR → BUFFER [0]

BUFFER [3]

BUFFER [7] BUFFER [4]

NE → BUFFER [6] BUFFER [5]

VA

VF

## FIG 8B

DATA SINK
STATE DIAGRAM

RFD = 1

O — SDAV — 1

LOAD = 1
RFD = 0

RFD = 0

O — SDAV — 1

# FIG 9A

DATA SOURCE
STATE DIAGRAM

DATA TO
REGISTER
NOT ASSERTED

O — DATA (N) — 1

DATA TO
REGISTER
ASSERTED

DATA (N) — 1

1 — CLR — O

# FIG 9B

LOAD/CLR AND DAV
STATE DIAGRAM

DAV = 1
LOAD/CLR=0

SRFD — O

DAV = 0
LOAD/CLR=1

DAV = 1
LOAD/CLR=0

1 — SRFD — O

# FIG 9C

EP 0 310 360 B1

31